# EUROPEAN PATENT APPLICATION

(11) **EP 1 362 668 A1**
(43) Date of publication of application: **19.11.2003**
(21) Application number: 03101307.1
(22) Date of filing: 12.05.2003
(51) Int. Cl.: B24B 7/18, B24B 1/00, B24B 23/03

(54) **Method for grinding stone materials**

(30) Priority: 13.05.2002 IT MI20021013
(71) Applicant: Künzle & Tasin S.p.A., 20131 Milano (IT)
(72) Inventor: Talucci, Fausto, 20099, SESTO SAN GIOVANNI (MILANO) (IT)
(74) Representative: Vatti, Paolo, Dr. Ing.

(57) **Abstract**

The invention concerns a method for grinding stone materials, particularly marbles, granites and the like, which allows to grind windowsills, steps, staircases and the like, without dripping or even splashing the residual grinding mud around and close to the surfaces being ground. Said method essentially consists in interposing a layer of gel diluted with water between the surfaces to be ground and the grinding tool. Said gel layer is spread over the surface to be ground before passing thereon the grinding tool, which generally consists of a portable orbital grinding machine with diamond abrasives.

Preferably, the gel interposed between the surface to be ground and the grinding tool is a neutral and fast gel diluted with 65-90% of water.

## Description

The present invention concerns a method for grinding stone materials, particularly marbles, granites and the like, said method being especially studied for use with portable orbital grinding machines on surfaces of limited extension and/or not having a prompt and easy access.

As known, for grinding very extensive floors, use is now generally made of heavy grinding machines of considerable dimensions which steadily bear onto the ground; whereas, for the grinding of surfaces of scarce and limited extension - such as windowsills, and/or surfaces of uneasy access such as steps and staircases - it is necessary to use portable orbital grinding machines.

While, for what concerns the first type of machines, there are no problems in feeding the considerable amounts of water required for the grinding operation - always carried out with abrasives, preferably diamond abrasives - with the second type of machines a problem arises both for the windowsills and for the steps: the water - even when its use is limited to quantities scarcely exceeding those strictly required, which is not always easy - inevitably ends up by determining the unpleasant phenomenon of the dripping of the grinding muds which are formed. This phenomenon - which the attention and good will of the operators is not able to positively limit - always creates serious inconveniences and it can very often cause damages, even not slight. One can thus understand the interest of the operators and the demand of the producers of grinding machines for methods and means - totally inexistent up-to-date - allowing to reduce or prevent the above phenomenon.

This object is reached with the method of the present invention, which fully eliminates the dripping problem caused by the grinding muds, in that it allows to grind windowsills, steps, staircases and the like, without dripping or even splashing the residual grinding mud around and close to the slabs being ground.

To reach this object, the present invention provides for a method for grinding stone materials, particularly marbles, granites and the like, characterized in that a layer of gel diluted with water is interposed between the surfaces to be ground and the grinding tool.

Suitably, according to said method, the gel layer is spread over the surface to be ground before passing thereon the grinding tool, which generally consists of a portable orbital diamond abrasives grinding machine.

Preferably, the gel interposed between the surface to be ground and the grinding tool is a neutral and fast gel diluted with 65-90% of water.

The invention will now be described in further detail hereinafter.

According to the method of the present invention, when wishing to prevent the dripping problem caused by the grinding muds - for example in the case of grinding steps and staircases, windowsills and the like, made of marble, granite or the like - one interposes, at least in some of the machining steps, a layer of gel diluted with water between the surface to be ground and the grinding tool.

Said gel layer is suitably spread over the surface to be ground before passing thereon the grinding tool and the gel being used must be a neutral and fast gel, so as to efficiently act as a thickening agent for the water with which it has to be diluted. For example, use can be made of a transparent gel of the type adopted for the suspension of polishing powders. To dilute it, it is advisable to add 65% to 90% of water, which the gel is apt to thicken and retain without any dripping problems. Preferably, particularly for the grinding marbles - which is the most interesting application and the one mostly tested up-to-date - it is convenient to add to the gel 70% to 80% of water.

For the grinding operation - to be carried out, as a good rule, in several steps - it is appropriate to use a portable orbital grinding machine with diamond abrasives, well balanced and having a high power and speed.

With such a machine, it is appropriate to first of all carry out some roughing steps (for instance two), performed in a fully dry state (without the use of any liquid or fluid substance). The gel will then be spread over the surface to be ground, already rough-worked, so as to subsequently carry out, with the same machine, three or four finishing steps.

In said steps the gel diluted with water, spread over the surface, acts as a water thickening agent, thereby preventing - as already said - any dripping thereof; at the same time, it acts as carrier for the water to allow the diamond abrasives to perform at best their grinding function.

The gel moreover allows to optimize the yield of the normal polishing powders, usually adopted in this type of machining, since it keeps them suspended, preventing the accumulation thereof and guaranteeing their uniform distribution. In this way, the diamond abrasives always act onto a clean surface, which represents an evident advantage.

It is anyhow understood that there may be other embodiments of the grinding method, differing from that described heretofore, rightfully falling within the protection scope of the present invention. In particular, there may be some changes in the number and order of the working steps, as well as in the percentages of the gel dilution with water.

## Claims

1. Method for grinding stone materials, particularly marbles, granites and the like, **characterized in that** a layer of gel diluted with water is interposed between the surfaces to be ground and the grinding tool.

2. Grinding method as in claim 1), wherein the gel layer is spread over the surface to be ground before passing thereon the grinding tool.

3. Grinding method as in claims 1) and 2), wherein the grinding tool consists of a portable orbital grinding machine with diamond abrasives.

4. Grinding method as in claims 1) to 3), wherein the gel interposed between the surface to be ground and the grinding tool is a neutral and fast gel diluted with 65-90% of water.

5. Grinding method as in claim 4), wherein said gel is diluted with 70-80% of water.

6. Method for grinding stone materials, particularly marbles, granites and the like, which provides for several steps carried out as in claims 1) to 5), using a layer of gel diluted with water, some roughing steps being performed in a fully dry state by means of a portable orbital grinding machine with diamond abrasives before said steps using the gel.
17 Grinding method as in claim 6), wherein two roughing steps are performed in a fully dry state by means of a portable orbital grinding machine with diamond abrasives, said roughing steps being followed by three or four finishing steps carried out as in claims 1) to 5) with the same machine, using a layer of gel diluted with water.
